# EUROPEAN PATENT APPLICATION

(11) **EP 3 725 641 A1**
(43) Date of publication of application: **21.10.2020**
(21) Application number: 18889348.1
(22) Date of filing: 05.12.2018
(51) Int. Cl.: B62B 3/02

(54) **INCLINATION-ADJUSTABLE CART APPARATUS**

(30) Priority: 11.12.2017 KR 20170169667
(71) Applicant: Newkoadwind.,Co.Ltd, Gwangju 61961 (KR)
(72) Inventor: CHANG, Minwoo, Gwangju 61961 (KR)
(74) Representative: BRP Renaud & Partner mbB Rechtsanwälte Patentanwälte Steuerberater
(86) International application number: PCT/KR2018/015289
(87) International publication number: WO 2019/117528

(57) **Abstract**

The present invention provides an inclination-adjustable cart apparatus comprising: a loading plate on which an object is loaded; a frame supported and fixed to one side of the loading plate and having a handle on the top side thereof so that same may be gripped by a hand; and wheels installed at the front and rear of the lower part of the loading plate so as to guide the movement thereof, wherein the wheels are divided into a front wheel part and a rear wheel part, and the front wheel part and the rear wheel part may be simultaneously lifted/lowered by means of a wheel shaft or a support plate, wherein the wheel shaft or the support plate is coupled to the bottom end of a lifting/lowering means, and the top end part of the lifting/lowering means is coupled to the bottom surface of the loading plate, wherein the lifting/lowering means is driven by a control part which is provided with a gyro sensor, and thus the loading plate may always be maintained in a horizontal state, regardless of a slope of a ground surface. The effect of the present invention is that the gyro sensor is provided to the cart so as to measure a slope, and by using same, the shaft heights of the front wheels and the rear wheels may be adjusted according to a slope of a road, and thus the cart loading plate for loading and transporting an object may always be maintained in a horizontal state, regardless of the slope of the road, and thus the present invention is very useful in that the object may be stably or conveniently transported without being separated from the cart loading plate, i.e., a cargo box.

## Description

### [TECHNICAL FIELD]

The present invention relates to an inclination-adjustable cart apparatus, and more particularly, to an inclination-adjustable cart apparatus in which an inclination is adjusted with respect to a loading plate of a cart for loading and conveying an object so as to always maintain the loading plate in a horizontal state, and the inclination is measured by a gyro sensor (levelling sensor) to adjust a height of a wheel, so that the object is always conveyed horizontally in response to an inclination condition of a road, which enables stable transportation of the object.

### [BACKGROUND ART]

In general, carts are mainly used to conveniently transport a large amount of objects, heavy objects, or the like within a short range in factories, restaurants, moving centers, and the like.

In other words, such carts as described above may be mainly object transportation carts as disclosed in Korean Patent Registration No. 10-1504724 and Korean Utility Model Registration No. 20-0298837, which are used to conveniently load and move heavy objects and many objects to a target place without directly moving the objects one by one using a hand or a body of a worker.

However, when moving the above carts after loading the objects in the carts, there are limitations to safely move the loaded objects depending on a ground surface condition of a road.

In other words, when a ground surface of the road on which the objects are moved after being loaded in the cart is uneven or inclined, the loaded objects may be biased to one side, and the objects may even be frequently separated from a cargo box of the cart, so that the worker may have a great inconvenience while conveying the objects.

### [DETAILED DESCRIPTION OF THE INVENTION]

### [TECHNICAL PROBLEM]

In order to solve the above problems, an object of the present invention is to provide an inclination-adjustable cart apparatus in which a gyro sensor (levelling sensor) is provided to a cart for transporting loads, and an inclination of a ground surface of a road is measured by the gyro sensor to adjust a height of a wheel, so that an object is always conveyed horizontally in response to an inclination condition of the road, which enables stable transportation of the object.

### [TECHNICAL SOLUTION]

In order to achieve the above objects, according to one embodiment of the present invention, there is provided an inclination-adjustable cart apparatus including: a loading plate on which an object is loaded; a frame supported and fixed to one side of the loading plate, and formed at an upper side thereof with a handle gripped by a hand; and wheels provided at front and rear lower portions of the loading plate to guide a movement of the inclination-adjustable cart apparatus, wherein the wheels are divided into a front wheel part and a rear wheel part, in which the front wheel part and the rear wheel part are simultaneously lifted/lowered by a wheel shaft or a support plate, wherein the wheel shaft or the support plate is coupled to a lower end of a lifting/lowering device, and an upper end of the lifting/lowering device is coupled to a bottom surface of the loading plate, and wherein the lifting/lowering device is driven by a control part having a gyro sensor such that the loading plate is always maintained in a horizontal state regardless of an inclination of a ground surface.

According to embodiments of the present invention, the lifting/lowering device may include: a jack and a motor; or a jack and a hydraulic cylinder.

### [ADVANTAGEOUS EFFECTS OF THE INVENTION]

An effect of the present invention as described above is that the gyro sensor is provided to the cart to measure an inclination, and heights of shafts of the front and rear wheels are adjusted according to the inclination of a road by using the gyro sensor, so that the loading plate of the cart for loading and conveying an object may always be maintained in a horizontal state regardless of the inclination of the road, and thus the present invention is very useful in that the object may be stably and conveniently conveyed without being separated from the loading plate, that is, a cargo box of the cart.

### [DESCRIPTION OF THE DRAWINGS]

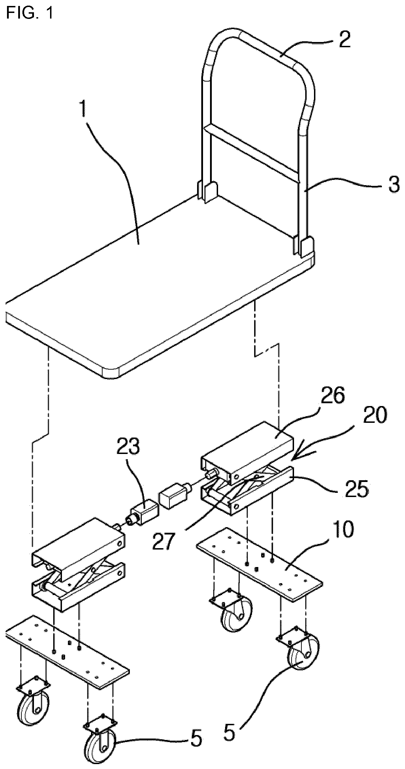

FIG. 1 is an exploded perspective view showing an inclination-adjustable cart apparatus according to one embodiment of the present invention.

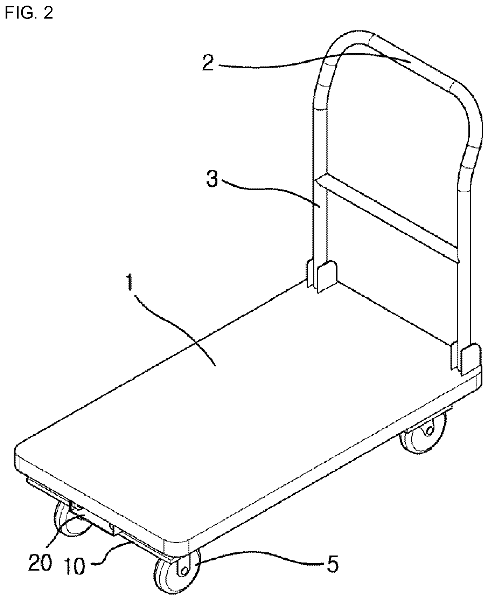

FIG. 2 is a perspective view showing an assembled state of the inclination-adjustable cart apparatus according to one embodiment of the present invention.

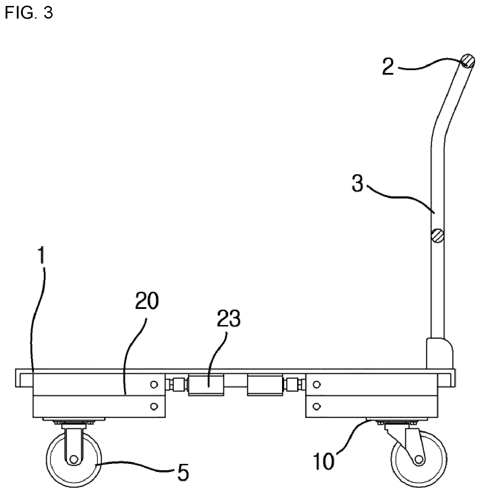

FIG. 3 is a side view showing the inclination-adjustable cart apparatus according to one embodiment of the present invention.

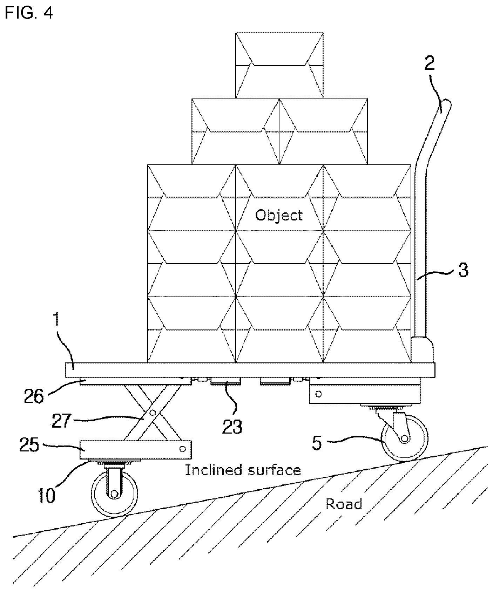

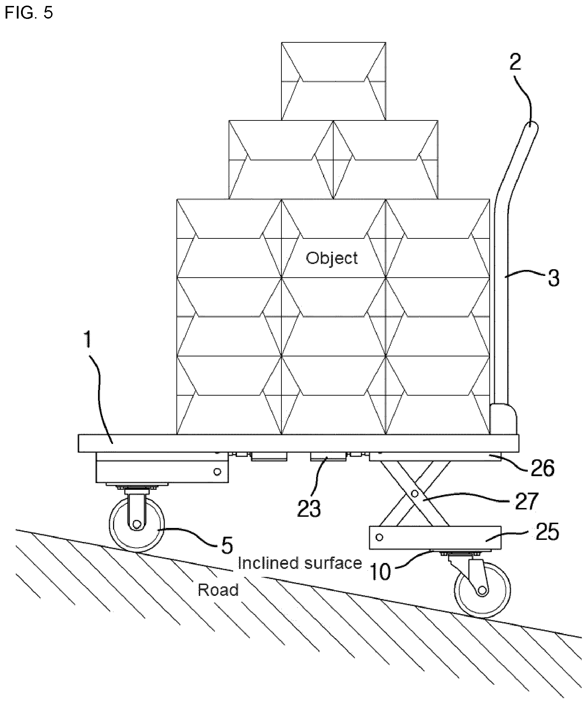

FIGS. 4 and 5 are views showing use of the inclination-adjustable cart apparatus according to one embodiment of the present invention.

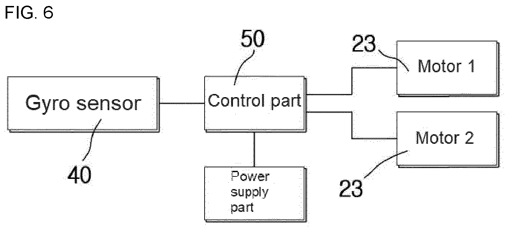

FIG. 6 is a block diagram showing an operation control state of the inclination-adjustable cart apparatus according to embodiments of the present invention.

### [BEST MODE]

Hereinafter, embodiments of the present invention will be described in detail with reference to the accompanying drawings so that a person having ordinary skill in the art to which the invention pertains may easily carry out the invention. However, the present invention can be implemented in many other forms, and is not limited to the embodiments described herein.

### [MODE FOR INVENTION]

The technical terms used herein are intended to describe specific embodiments only, and are not intended to limit the present invention. In addition, unless the phrases clearly indicate to the contrary, expressions in a singular form include a meaning of a plural form. As used herein, the meaning of the term "including" is intended to embody specific properties, regions, integers, steps, operations, elements, and/or components, but is not intended to preclude the presence or addition of other specific properties, regions, integers, steps, operations, elements, components, and/or groups thereof. Although not otherwise defined, all terms, including technical terms and scientific terms, used herein have the same meaning as how they are generally understood by a person having ordinary skill in the art to which the invention pertains. Any terms that are defined in a general dictionary shall be construed to have meanings coinciding with those disclosed in relevant technical documents and the following description, and shall not be construed to have idealistic or formalistic meanings unless they are defined as such.

Ideal embodiments of the present invention will be described in detail with reference to the perspective view. As a result, it will be expected that various modifications of the drawings, for example, modifications of a manufacturing method and/or specifications can be made. Therefore, the embodiments are not limited to specific forms of shown regions, and include, for example, modification of the forms due to manufacture. For example,
regions shown or described as being flat may generally be rough, or rough and nonlinear. In addition, a portion shown as being sharpened at an angle thereof may be rounded. Therefore, the regions shown in the drawings are only schematically illustrated by nature, and the forms of the regions are not intended to show accurate shapes of the regions and are not intended to narrow the scope of the present invention.

Hereinafter, preferred embodiments of an inclination-adjustable cart apparatus according to the present invention will be described in detail with reference to the accompanying drawings.

First, it should be noted that, among the drawings, the same elements or components will be designated by the same reference numerals as possible. In addition, in the following description of the present invention, detailed descriptions of relevant known functions or configurations will be omitted to avoid obscuring the subject matter of the present invention. As shown in the drawing, there is provided a cart apparatus including: a loading plate (1) on which an object is loaded; a frame (3) supported and fixed to one side of the loading plate (1), and formed at an upper side thereof with a handle (2) gripped by a hand; and wheels (5) provided at front and rear lower portions of the loading plate (1) to guide a movement of the cart apparatus,
wherein an inclination is adjusted with respect to the loading plate (1) of a cart for loading and conveying the object so that the loading plate (1) may always be maintained in a horizontal state. In other words, in the inclination-adjustable cart apparatus according to embodiments of the present invention in which the loaded object is always maintained at a predetermined height in response to an inclination condition of a road so that the object may be conveniently and stably conveyed,
according to one embodiment, a height of the wheel (5) may be adjusted to maintain the loading plate (1) on which the object is loaded in the horizontal state. First, the height of the wheel (5) may be adjusted to maintain the loading plate (1) in the horizontal state. For convenience, the wheels (5) may be divided into a front wheel part which is far from the handle (2) and a rear wheel part which is close to the handle.

As such, the front wheel part and the rear wheel part may be simultaneously lifted/lowered by a wheel shaft (not shown) or a support plate (10), the wheel shaft or the support plate (10) may be coupled to a lower end of a lifting/lowering device, an upper end of the lifting/lowering device may be coupled to a bottom surface of the loading plate (1), and the lifting/lowering device may be driven by a control part (50) having a gyro sensor (40) such that the loading plate
(10) may be always maintained in the horizontal state regardless of an inclination of a ground surface.

The lifting/lowering device may include a known jack, and a motor or a hydraulic cylinder (not shown) for driving the jack.

An example of the present invention in which the support plate (10) is used will be described. In other words, the wheels (5) may be coupled to a lower portion of the support plate (10). In this case, the support plate (10) may be coupled to each of the wheels (5) provided at front and rear portions of the support plate (10) through a coupling device such as a bolt (not shown), and may be coupled to a lower portion of the jack (20) through the bolt.

The support plate (10) may operate in a vertical direction by the jack (20) according to an operation of a motor (23), and eventually, the wheels (5) coupled to the support plate (10) may also be driven vertically.

The jack (20) may include: a lower support plate (25) coupled to the support plate (10); an upper support plate (26) coupled to the loading plate (1); and an extension member (27) provided between the lower support plate (25) and the upper support plate 26 and extending to adjust the height of the wheel (5).

The jack (20) driven in the vertical direction by adjusting the height of the wheel (5) through extending the extension member (27) may also be driven through an operation of the hydraulic cylinder (not shown) instead of the motor. In addition, a vertical operation of the jack (20) may be performed through a conventional gyro sensor (40) that operates in response to the inclination of a road surface upon transportation.

In other words, when the cart apparatus on which the object is loaded moves along the road, the gyro sensor (40) may detect road conditions such as an inclination or a curve of the road to send the detected road conditions to the control part (50), and the control part (50) may selectively operate the motor (23) provided at front and rear portions of the cart apparatus to operate the corresponding jack (20) so that a height of a front or rear portion of the loading plate (1) may be adjusted. Therefore, when the object is to be moved through the cart apparatus according to one embodiment as described above, in a case where an inclined surface of the road is directed rearward, the jack (20) on a rear wheel (5) may be operated to extend so that the loading plate 1 moves up to maintain the horizontal state, and conversely, in a case where the inclined surface of the road is directed forward, the jack (20) on a front wheel (5) may be operated to extend so that the loading plate (1) moves up to maintain the horizontal state. Accordingly, the loaded object may be moved horizontally without being biased to one side.

As described above, although specific embodiments of the present invention have been described, the present invention is not limited thereto. It is understood that various changes and modifications can be made by a person having ordinary skill in the art to which the invention pertains without departing from the technical idea of the present invention and the scope of the equivalents of the appended claims.

### [INDUSTRIAL APPLICABILITY]

The present invention may allow many people to safely transport an object without damaging or dropping the object, so that the present invention may be used by many people in the industry.

### [FREE TEXT]

- 1:: Loading plate
- 2:: Handle
- 3:: Frame
- 5:: Wheels
- 10:: Support plate
- 20:: Jack
- 23:: Motor
- 25:: Lower support plate
- 26:: Upper support plate
- 27:: Extension member
- 30:: Lower plate
- 31:: Concave groove
- 40:: Gyro sensor
- 50:: Control part

## Claims

1. An inclination-adjustable cart apparatus comprising: a loading plate on which an object is loaded; a frame supported and fixed to one side of the loading plate, and formed at an upper side thereof with a handle gripped by a hand; and wheels provided at front and rear lower portions of the loading plate to guide a movement of the inclination-adjustable cart apparatus, wherein the wheels are divided into a front wheel part and a rear wheel part, in which the front wheel part and the rear wheel part are simultaneously lifted/lowered by a wheel shaft or a support plate, wherein the wheel shaft or the support plate is coupled to a lower end of a lifting/lowering device, and an upper end of the lifting/lowering device is coupled to a bottom surface of the loading plate, wherein the lifting/lowering device is driven by a control part having a gyro sensor such that the loading plate is always maintained in a horizontal state regardless of an inclination of a ground surface, and wherein the lifting/lowering device includes: a jack and a motor; or a jack and a hydraulic cylinder.
